# FASCICULE DE BREVET EUROPEEN

(11) **EP 2 150 442 B1**
(45) Date de publication et mention de la délivrance du brevet: **15.09.2010**
(21) Numéro de dépôt: 08805689.0
(22) Date de dépôt: 22.04.2008
(51) Int. Cl.: B60R 21/34

(54) **SYSTEME D'ARTICULATION POUR VEHICULE AUTOMOBILE**
GELENKSYSTEM FÜR AUTOMOBILE
ARTICULATION SYSTEM FOR AUTOMOBILE

(30) Priorité: 31.05.2007 FR 0755384
(43) Date de publication de la demande: 10.02.2010
(73) Titulaire: Peugeot Citroën Automobiles SA, 78140 Vélizy-Villacoublay (FR)
(72) Inventeur: GOURVENNEC, Thibault, F-91170 Viry-Chatillon (FR); BENANE, Saïd, F-94550 Chevilly La Rue (FR); NOIZET, Jessica, F-91120 Palaiseau (FR)
(74) Mandataire: Allain, Laurent
(86) Numéro de dépôt international: PCT/FR2008/050735
(87) Numéro de publication internationale: WO 2008/148969

(56) Documents cités:
- EP-A- 1 516 787
- EP-A- 1 743 812
- JP-A- 2000 108 842

## Description

La présente invention se rapporte à un système de charnière pour capot de véhicule automobile, ainsi qu'un véhicule automobile équipé de ce système d'articulation.

En particulier, la présente invention concerne un système d'articulation pour véhicule automobile, comprenant une charnière d'articulation d'un capot à la structure du véhicule automobile et un absorbeur de choc indépendant de la charnière, la structure et la matière de l'absorbeur de choc et de la charnière étant choisies de sorte que l'absorbeur de choc soit plus déformable que la charnière. Un tel système est divulgué dans le document EP 1 743 812.

La plupart des véhicules automobiles comportent un capot articule dans sa partie arrière à la structure du véhicule par une charnière.

En cas de choc frontal du véhicule avec un piéton, la tête du piéton vient en général heurter le capot. Lors de l'impact de la tête du piéton sur le capot, il se produit un enfoncement du capot jusqu'à une éventuelle collision de la tête sur des éléments rigides situés sous le capot, tels que les charnières d'articulation du capot à la structure du véhicule. Ces impacts contre des éléments rigides constituent la cause principale des décès ou des blessures des piétons renversés.

Pour éviter des blessures graves ou même des décès, certains véhicules automobiles sont équipés de charnières propres à se déformer en cas de choc pour absorber l'énergie du choc.

Toutefois, ces charnières sont peu résistantes et se déforment facilement lorsque le capot est manipulé par l'utilisateur ou lorsque des contraintes extérieures sont appliquées sur le capot.

L'invention a pour but de fournir un système d'articulation qui soit à la fois résistant aux manoeuvres et qui puisse absorber tout ou une partie des efforts liés à un choc piéton.

A cet effet, l'invention a pour but un système d'articulation comprenant un absorbeur de choc comprend une partie escamotable portant la charnière, la partie escamotable s'étendant en porte-à-faux au-dessus d'un espace vide et étant apte à se déformer lors d'un choc pour escamoter ladite charnière dans ledit espace vide.

Suivant des modes particuliers de réalisation, le système d'articulation comporte l'une ou plusieurs des caractéristiques suivantes :
- l'absorbeur de choc comporte en outre une partie de fixation destinée à être assemblée à la structure du véhicule, la partie de fixation comprenant une première paroi liée à la partie escamotable et s'étendant sensiblement perpendiculairement à celle-ci, l'espace vide étant défini entre la première paroi et la partie escamotable ;
- la partie de fixation présente une forme complémentaire à la forme de la structure du véhicule à laquelle la partie de fixation est destinée à être fixée ;
- la partie de fixation comprend en outre une deuxième paroi liée à la première paroi et s'étendant sensiblement perpendiculairement à celle-ci, et une troisième paroi liée à la deuxième paroi et s'étendant sensiblement perpendiculairement à celle-ci ;
- la charnière comprend un support et un bras articulé au support, le bras étant destiné à être fixé au capot du véhicule automobile, et la partie escamotable est propre à se déformer le long d'un axe sensiblement perpendiculaire à l'axe d'articulation de la charnière et à l'axe longitudinale du bras ;
- l'absorbeur de choc est constitué d'une matière choisie parmi le groupe comprenant l'acier, l'aluminium, une matière composite et une matière plastique ;
- la charnière est fixée à l'absorbeur de choc par soudage, clinchage ou vissage ; et
- l'absorbeur de choc comporte des nervures de renfort propre à accroître sa rigidité.

L'invention sera mieux comprise à la lecture de la description qui va suivre, donnée uniquement à titre d'exemple et faite en se référant aux dessins, sur lesquels :
- la figure 1 est une vue schématique d'un véhicule automobile comportant un système d'articulation selon l'invention ;
- la figure 2 est une vue en perspective d'un système d'articulation selon l'invention ;
- la figure 3 est une vue schématique en coupe du système d'articulation dans un état non déformé ; et
- la figure 4 est une vue schématique similaire à la vue de la figure 3 dans un état déformé.

L'invention concerne un système d'articulation 2 pour véhicule automobile 4.

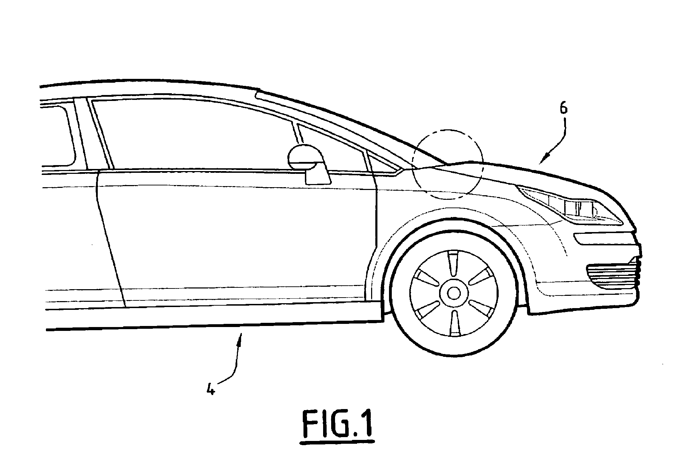

Un tel système d'articulation 2 est destiné à être fixé d'une part de chaque côté de la structure avant du véhicule 4 et d'autre part à l'arrière d'un capot 6, au niveau d'une zone matérialisée par des pointillés sur la figure 1, pour permettre le pivotement du capot 6 et donner l'accès à l'espace sous capot.

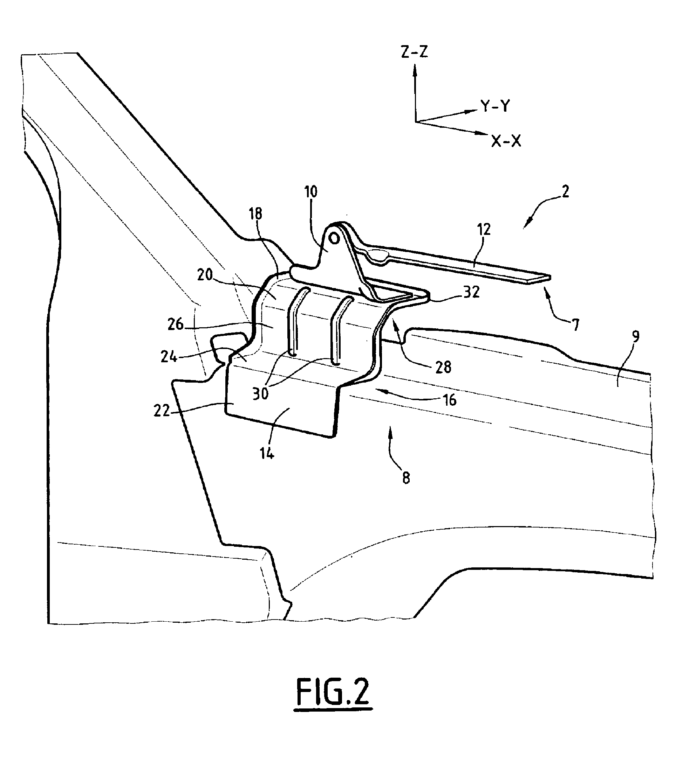

Le système d'articulation 2 selon l'invention est représenté schématiquement sur la figure 2. Il comporte une charnière rigide 7 et un absorbeur de choc 8 fixé à un renfort avant côté habitacle 9 ou à une doublure d'aile avant.

La charnière rigide 7 comprend un support 10 fixé par soudage, clinchage ou vissage à l'absorbeur de choc 8, et un bras 12 portant le capot 6. Une extrémité du bras 12 est articulée au support 10 autour d'un axe d'articulation Y-Y. Le bras de support du capot 12 s'étend selon une direction X-X perpendiculaire à l'axe d'articulation Y-Y.

La charnière rigide 7 est réalisée en acier. Le support 10 et le bras 12 sont formés dans une plaque d'épaisseur environ égale à 2,5mm.

L'absorbeur 8 est formé par une plaque de support 14 rectangulaire, pliée transversalement. Elle comprend une partie de fixation 16 et une partie escamotable 18 liée à la partie de fixation 16 par une zone de déformation 20 en forme de coude.

La plaque de support 14 de l'absorbeur 8 présente une épaisseur supérieure à celle de la plaque du support 10, par exemple égale à 4 mm.

La partie de fixation 16 est constituée de trois parois 22, 24, 26 liées l'une à l'autre et s'étendant sensiblement perpendiculairement l'une à l'autre.

Les parois 22, 24 et 26 sont fixées par soudage, clinchage ou vissage à une forme complémentaire du renfort avant côté habitacle 9.

La paroi 26 s'étend en saillie par rapport à la paroi 24 lorsque l'absorbeur de choc 8 est fixé sur le renfort avant côté habitacle 9 du véhicule.

La partie escamotable 18 est constituée d'une paroi 28 liée à la paroi 26 de la partie de fixation. Elle s'étend perpendiculairement à celle-ci, en porte-à-faux au-dessus d'un espace vide 28.

La plaque de support 14 est constituée d'acier, d'aluminium, de matière composite ou de matière plastique.

L'épaisseur de la plaque de support 14 est calculée de manière à répondre au mieux au critère d'absorption souhaitée. En particulier, la plaque 14 est propre à se déformer plastiquement au niveau de la zone de déformation 20.

La plaque de support 14 comprend en outre des nervures 30 s'étendant selon sa direction longitudinale, en particulier le long des parois 24 et 26 et un rebord 32 bordant la plaque de support 14 pour augmenter sa raideur.

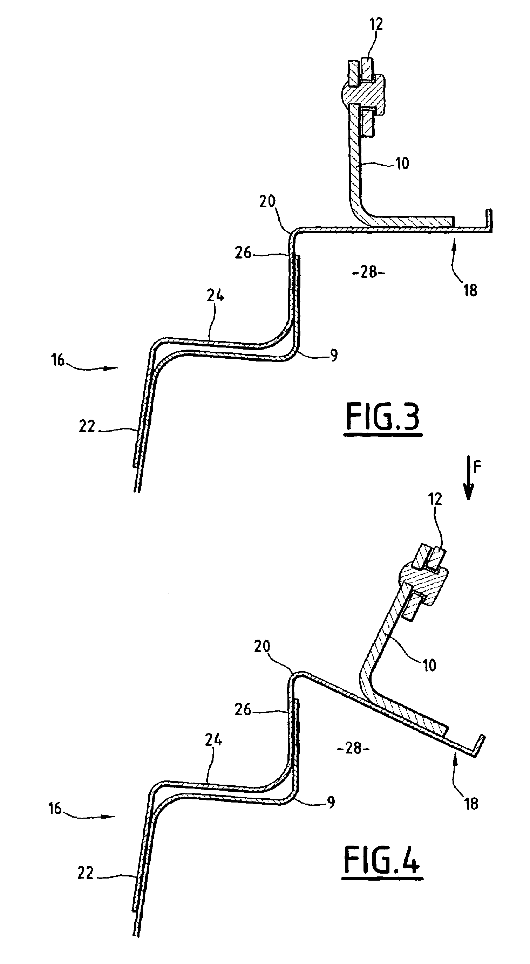

Lorsqu'un piéton, et notamment la tête d'un piéton, vient heurter le capot 6, il exerce une force F sur la charnière 7, généralement dirigée selon une direction perpendiculaire à la partie escamotable 18. Sous l'action de la force F, la zone de déformation 20 est déformée pour permettre le pivotement de la partie escamotable 18 autour de la partie supérieure de la paroi 26, afin d'escamoter la charnière 7 dans l'espace vide 28 tel qu'illustré sur la figure 4.

En particulier, lors de la déformation de l'absorbeur de choc 8, la partie escamotable 18 pivote autour d'un axe sensiblement perpendiculaire à l'axe d'articulation Y-Y de la charnière 7 et à l'axe longitudinal X-X du bras 12.

L'absorbeur de choc 8 permet d'amortir ou d'absorber tout ou une partie des efforts générés par la pression de la tête du piéton de sorte que la charnière est déplacée dans l'espace vide 8 pour ne pas blesser violemment le piéton.

L'utilisation d'une charnière rigide 7 facilite la mise en jeu du capot 6 par rapport aux ailes sur les lignes de ferrage.

Après le choc, la charnière 7 conserve sa fonctionnalité, elle permet encore d'ouvrir le capot. Lors de la réparation du véhicule, la charnière 7 n'est donc pas à remplacer, il suffit de remplacer l'absorbeur de choc 8.

En variante, la partie de fixation 16 comporte uniquement une paroi 26 ou uniquement une paroi 26 et une paroi 24 destinées à être fixées au renfort avant côté habitacle 9.

En variante, la partie de fixation présente une forme différente permettant le pliage de la partie escamotable 18 dans un espace vide.

En variante, le support 10 est réalisé en acier et présente une épaisseur de 2,5 mm et la plaque de support 14 est réalisée en acier et présente une épaisseur de 1,47 mm. Cette variante est moins onéreuse.

En variante, l'absorbeur 8 est réalisé dans une même matière composite ou plastique d'une épaisseur de 2,5 mm.

En variante, le support 10 est réalisé dans une tôle classique d'une épaisseur de 2,5 mm ou 3 mm.

Cette invention permet de préserver les avantages liés à l'utilisation d'une charnière rigide, à savoir la solidité et la résistance, tout en permettant l'absorption de l'énergie liée à un choc avec un piéton.

L'invention concerne également un véhicule automobile comportant un système d'articulation tel que décrit ci-dessus.

## Revendications

1. Système d'articulation (2) pour véhicule automobile (4), comprenant une charnière (7) d'articulation d'un capot (6) à la structure (9) du véhicule automobile (4), le système comprenant un absorbeur de choc (8) indépendant de la charnière (7), la structure et la matière de l'absorbeur de choc (8) et de la charnière (7) étant choisies de sorte que l'absorbeur de choc (8) soit plus déformable que la charnière (7), **caractérisé en ce que** l'absorbeur de choc (8) comprend une partie escamotable (18) portant la charnière (7), la partie escamotable (18) s'étendant en porte-à-faux au-dessus d'un espace vide (28) et étant apte à se déformer lors d'un choc pour escamoter ladite charnière (7) dans ledit espace vide (28).

2. Système d'articulation (2) selon la revendication 1, **caractérisé en ce que** l'absorbeur de choc (8) comporte en outre une partie de fixation (16) destinée à être assemblée à la structure (9) du véhicule, la partie de fixation comprenant une première paroi (26) liée à la partie escamotable (18) et s'étendant sensiblement perpendiculairement à celle-ci, l'espace vide (28) étant défini entre la première paroi (26) et la partie escamotable (18).

3. Système d'articulation (2) selon la revendication 2, **caractérisé en ce que** la partie de fixation (16) présente une forme complémentaire à la forme de la structure (9) du véhicule à laquelle la partie de fixation (16) est destinée à être fixée.

4. Système d'articulation (2) selon la revendication 2 ou 3, **caractérisé en ce que** la partie de fixation (16) comprend en outre une deuxième paroi (24) liée à la première paroi (26) et s'étendant sensiblement perpendiculairement à celle-ci, et une troisième paroi (22) liée à la deuxième paroi (24) et s'étendant sensiblement perpendiculairement à celle-ci.

5. Système d'articulation (2) selon l'une quelconque des revendications précédentes, **caractérisé en ce que** la charnière (7) comprend un support (10) et un bras (12) articulé au support (10), le bras (12) étant destiné à être fixé au capot (6) du véhicule automobile (4), et **en ce que** la partie escamotable (18) est propre à se déformer le long d'un axe sensiblement perpendiculaire à l'axe d'articulation (Y-Y) de la charnière (7) et à l'axe longitudinale (X-X) du bras (12).

6. Système d'articulation (2) selon l'une quelconque des revendications précédentes, **caractérisé en ce que** l'absorbeur de choc (8) est constitué d'une matière choisie parmi le groupe comprenant l'acier, l'aluminium, une matière composite et une matière plastique.

7. Système d'articulation (2) selon l'une quelconque des revendications précédentes, **caractérisé en ce que** la charnière (7) est fixée à l'absorbeur de choc (8) par soudage, clinchage ou vissage.

8. Système d'articulation (2) selon l'une quelconque des revendications précédentes, **caractérisé en ce que** l'absorbeur de choc comporte des nervures (30, 32) de renfort propre à accroître sa rigidité.

9. Véhicule automobile (4) comportant un capot (6), **caractérisé en ce qu'**il comporte un système d'articulation (2) selon l'une quelconque des revendications précédentes, l'absorbeur de choc (8) étant fixé au renfort avant côté habitacle (9) ou à une doublure d'aile avant.

## Claims

1. Articulation system (2) for a motor vehicle (4), comprising a hinge (7) articulating the bonnet (6) to the structure (9) of the motor vehicle (4), the system comprising an impact absorber (8) independent of the hinge (7), the structure and the material of the impact absorber (8) and of the hinge (7) being chosen so that the impact absorber (8) is more deformable than the hinge (7), **characterized in that** the impact absorber (8) comprises a retractable part (18) carrying the hinge (7), the retractable part (18) extending cantilever fashion across an empty space (28) and being able to deform in the event of an impact in order to retract the said hinge (7) into the said empty space (28).

2. Articulation system (2) according to Claim 1, **characterized in that** the impact absorber (8) further comprises a fixing part (16) intended to be assembled to the structure (9) of the vehicle, the fixing part comprising the first wall (26) connected to the retractable part (18) and running substantially at right angles thereto, the empty space (28) being defined between the first wall (26) and the retractable part (18).

3. Articulation system (2) according to Claim 2, **characterized in that** the fixing part (16) has a shape that complements the shape of the structure (9) of the vehicle to which the fixing part (16) is intended to be fixed.

4. Articulation system according to Claim 2 or 3, **characterized in that** the fixing part (16) further comprises a second wall (24) connected to the first wall (26) and running substantially at right angle thereto, and a third wall (22), connected to the second wall (24), and running substantially at right angles thereto.

5. Articulation system (2) according to any one of the preceding claims, **characterized in that** the hinge (7) comprises a mount (10) and an arm (12) articulated to the mount (10), the arm (12) being intended to be fixed to the bonnet (6) of the motor vehicle (4), and **in that** the retractable part (18) is able to deform about an axis substantially perpendicular to the axis of articulation (Y - Y) of the hinge (7) and to the longitudinal (X - X) of the arm (12).

6. Articulation system (2) according to any one of the preceding claims, **characterized in that** the impact absorber (6) is made of a material chosen from the group containing steel, aluminium, a composite and a plastic.

7. Articulation system (2) according to any one of the preceding claims, **characterized in that** the hinge (7) is fixed to the impact absorber (8) by welding, clinching or screw fastening.

8. Articulation system (2) according to any one of the preceding claims, **characterized in that** the impact absorber comprises reinforcing ribs (30, 32) able to improve its rigidity.

9. Motor vehicle (4) comprising a bonnet (6), **characterized in that** it comprises an articulation system (2) according to any one of the preceding claims, the impact absorber (8) being fixed to the front reinforcement on the cabin side (9) or to a front wing lining.

## Patentansprüche

1. Gelenksystem (2) für ein Kraftfahrzeug (4) mit einem Scharnier (7) zum Anlenken einer Motorhaube (6) an die Struktur (9) des Kraftfahrzeugs (4), wobei das System einen vom Scharnier (7) unabhängigen Aufpralldämpfer (8) umfasst, wobei die Struktur und das Material des Aufpralldämpfers (8) und des Scharniers (7) so ausgewählt sind, dass der Aufpralldämpfer (8) deformierbarer ist als das Scharnier (7), **dadurch gekennzeichnet, dass** der Aufpralldämpfer (8) ein einziehbares Teil (18) umfasst, das das Scharnier (7) trägt, sich auskragend über einem Leerraum (28) erstreckt und geeignet ist, sich bei einem Aufprall zu deformieren, um das Scharnier (7) in den Leerraum (28) einzuziehen.

2. Gelenksystem (2) nach Anspruch 1, **dadurch gekennzeichnet, dass** der Aufpralldämpfer (8) ferner ein Befestigungsteil (16) umfasst, das dazu bestimmt ist, an der Struktur (9) des Fahrzeugs angeordnet zu werden, wobei das Befestigungsteil eine erste Wand (26) umfasst, die mit dem einziehbaren Teil (18) verbunden ist und sich im Wesentlichen senkrecht dazu erstreckt, wobei der Leerraum (28) zwischen der ersten Wand (26) und dem einziehbaren Teil (18) definiert ist.

3. Gelenksystem (2) nach Anspruch 2, **dadurch gekennzeichnet, dass** das Befestigungsteil (16) eine Form aufweist, die zu der Form der Struktur (9) des Fahrzeugs komplementär ist, an der das Befestigungsteil (16) befestigt werden soll.

4. Gelenksystem (2) nach Anspruch 2 oder 3, **dadurch gekennzeichnet, dass** das Befestigungsteil (16) ferner eine zweite Wand (24), die mit der ersten Wand (26) verbunden ist und sich im Wesentlichen senkrecht dazu erstreckt, sowie eine dritte Wand (22) umfasst, die mit der zweiten Wand (24) verbunden ist und sich im Wesentlichen senkrecht dazu erstreckt.

5. Gelenksystem (2) nach einem der vorhergehenden Ansprüche, **dadurch gekennzeichnet, dass** das Scharnier (7) eine Stütze (10) und einen an der Stütze (10) angelenkten Arm (12) umfasst, wobei der Arm (12) dazu bestimmt ist, an der Motorhaube (6) des Kraftfahrzeugs (4) befestigt zu werden, und dass sich das einziehbare Teil (18) entlang einer im Wesentlichen senkrecht zur Gelenkachse (Y - Y) des Scharniers (7) und zur Längsachse (X - X) des Arms (12) verlaufenden Achse deformieren kann.

6. Gelenksystem (2) nach einem der vorhergehenden Ansprüche, **dadurch gekennzeichnet, dass** der Aufpralldämpfer (8) aus einem Material besteht, das aus der Stahl, Aluminium, Verbundmaterial und Kunststoff umfassenden Gruppe ausgewählt ist.

7. Gelenksystem (2) nach einem der vorhergehenden Ansprüche, **dadurch gekennzeichnet, dass** das Scharnier (7) durch Schweißen, Clinchen oder Schrauben am Aufpralldämpfer (8) befestigt ist.

8. Gelenksystem (2) nach einem der vorhergehenden Ansprüche, **dadurch gekennzeichnet, dass** der Aufpralldämpfer Verstärkungsrippen (30, 32) umfasst, die seine Steifigkeit erhöhen können.

9. Kraftfahrzeug (4) mit einer Motorhaube (6), **dadurch gekennzeichnet, dass** es ein Gelenksystem (2) nach einem der vorhergehenden Ansprüche umfasst, wobei der Aufpralldämpfer (8) an der fahrgastraumseitigen (9) vorderen Verstärkung oder an einer Vorderflügelauskleidung befestigt ist.
